# FASCICULE DE BREVET EUROPEEN

(11) **EP 1 762 068 B1**
(45) Date de publication et mention de la délivrance du brevet: **29.05.2019**
(21) Numéro de dépôt: 04710894.9
(22) Date de dépôt: 13.02.2004
(51) Int. Cl.: H04L 29/06, H04N 21/60, G06F 17/30

(54) **PROCEDE D'EDITION DE PAGES MULTIMEDIA AUPRES D'UN TERMINAL,AVEC PRE-MEMORISATION DE PARAMETRES D'OBJETS INTERVENANT DANS LES SCENES**
VERFAHREN ZUM EDITIEREN VON MULTIMEDIASEITEN AUF EINEM TERMINAL, MIT VORSPEICHERUNG VON PARAMETERN VON IN DEN SZENEN ENTHALTENEN OBJEKTEN
METHOD FOR EDITING MULTIMEDIA PAGES ON A TERMINAL USING PRE-STORED PARAMETERS OF OBJECTS APPEARING IN SCENES

(43) Date de publication de la demande: 14.03.2007
(73) Titulaire: Orange, 75015 Paris (FR)
(72) Inventeur: GEGOUT, Cédric, F-35000 Rennes (FR)
(74) Mandataire: Cabinet Plasseraud
(86) Numéro de dépôt international: PCT/FR2004/000340
(87) Numéro de publication internationale: WO 2005/088928

(56) Documents cités:
- DE-A- 10 047 338
- NIEDERMEIER U ET AL: "An MPEG-7 tool for compression and streaming of XML data" PROCEEDINGS 2002 IEEE INTERNATIONAL CONFERENCE ON MULTIMEDIA AND EXPO, vol. 1, 26 août 2002 (2002-08-26), pages 521-524, XP010604420
- GIRARDOT M ET AL: "Efficient representation and streaming of XML content over the Internet medium" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 juillet 2000 (2000-07-30), pages 67-70, XP010511404 ISBN: 0-7803-6536-4

## Description

L'invention concerne l'édition de pages multimédia auprès de terminaux, notamment dans le cadre de services multimédia proposés sur des téléphones mobiles agencés pour coopérer avec des réseaux cellulaires.

Dans le contexte de l'invention, un serveur distribue, à un ou plusieurs terminaux, une partie au moins de pages multimédia sous forme d'instructions d'agencements d'objets intervenant dans une page multimédia et identifiés par des paramètres associés.

On entend par "*page multimédia*" par exemple une scène graphique à éditer auprès du terminal, le cas échéant agrémentée d'une ou plusieurs séquences sonores à jouer sur des baffles ou écouteurs du terminal.

Dans ce contexte, un même objet (par exemple un objet graphique dans une scène graphique) peut être utilisé d'une page à l'autre ou un même objet peut conserver les mêmes paramètres d'agencements d'une page multimédia à l'autre. Dans ce cas, il se pose le problème de transmission et stockage systématiques et inutiles de données relatives à cet objet ou encore à des paramètres d'agencements du même objet, pour plusieurs pages dans lesquelles le même objet intervient avec les mêmes paramètres d'agencements. Ce problème devient particulièrement gênant lorsque l'on doit avoir recours à plusieurs échanges entre le terminal et le serveur d'autant plus que la bande passante allouée pour la communication entre le serveur et le terminal (notamment mobile) peut être restreinte.

La présente invention propose un mécanisme de stockage d'informations sur les objets qui apparaissent dans la description d'une page multimédia.

Pour ce qui concerne l'édition de scènes graphiques, plusieurs formats de représentation graphique d'animations graphiques existent actuellement. Cependant, aucun de ces formats ne propose un tel mécanisme de stockage.

On connaît des techniques qui permettent de stocker les informations partielles d'une scène graphique, mais qui utilisent à cet effet des méthodes programmatiques (par exemple les formats MPEG/MPEGJ ou VRML/EAI), dans un but tout différent de celui de la présente invention. D'ailleurs, ces techniques souffrent d'un manque de souplesse, en ce sens qu'il est impossible de télécharger des morceaux de contenu programmatique. Elles souffrent aussi d'un manque d'efficacité dans le rendu graphique, en ce sens qu'il est nécessaire de lancer une machine virtuelle pour traiter le contenu programmatique.

L'un des buts visés par la présente invention concerne la réduction de la mémoire, notamment graphique, des terminaux, nécessaire à l'édition de pages multimédia complexes, ou d'une succession de telles pages.

Un autre but visé par la présente invention concerne la réduction des ressources de calcul nécessaires à l'édition de telles pages, ou d'une succession de ces pages.

Un autre but visé par la présente invention est de fournir un procédé permettant d'accomplir les buts visés ci-avant tout en offrant une compatibilité avec les techniques classiques de décodage.

Plus généralement, un but visé par la présente invention est d'offrir une plus grande flexibilité au niveau des requêtes et données échangées entre le serveur et le terminal.

La présente invention propose tout d'abord un procédé dans lequel un serveur distribue, à un ou plusieurs terminaux, une partie au moins de pages multimédia sous forme d'instructions d'agencements d'objets identifiés par des paramètres associés,
ce procédé comportant :
a) au moins une étape préalable pendant laquelle le serveur transmet au moins une partie des paramètres associés à un objet, ainsi qu'une instruction de stockage desdits paramètres dans une mémoire du terminal,
b) et au moins une étape courante pendant laquelle le serveur transmet une instruction de simple restauration desdits paramètres préalablement stockés en mémoire du terminal, pour éditer au moins une page multimédia dans laquelle intervient ledit objet.

Ainsi, le procédé au sens de l'invention permet une réduction de la mémoire du terminal, notamment de sa mémoire graphique par exemple dans le contexte d'édition de scènes graphiques, puisque l'on ne mémorise que la commande de stockage, par exemple d'informations sur des noeuds graphiques décrivant des objets intervenant dans une ou plusieurs scènes.

Le procédé au sens de l'invention permet aussi un gain dans l'utilisation des ressources de calcul, puisque, typiquement, l'utilisation d'un contenu programmatique tel qu'il est proposé dans MPEG-4/System/MPEGJ (ou en SVG/DOM) induirait un net surcoût de calcul, au moins pour certaines animations. Avantageusement, le procédé au sens de l'invention, utilisant un mécanisme conforme à un processus classique de rendu de commande graphique ou sonore, est alors facile à implémenter, en particulier pour un système à terminaux mobiles.

Le procédé au sens de l'invention offre aussi une compatibilité avec les techniques classiques de décodage, puisque le procédé peut être mis en oeuvre dans la plupart des dispositifs de rendu graphique et/ou sonore.

Selon une caractéristique avantageuse, l'étape b) seule est réitérée pour l'édition de plusieurs pages multimédia dans lesquelles intervient ledit objet.

Dans une réalisation, les paramètres stockés comportent au moins des attributs déclaratifs d'un agencement de l'objet dans une ou plusieurs pages multimédia dans lesquelles cet objet intervient avec les mêmes attributs.

Préférentiellement, ces paramètres comportent en outre un identifiant d'une zone mémoire du terminal allouée pour le stockage des attributs et, avantageusement, l'instruction de restauration comporte l'identifiant de cette zone mémoire pour retrouver les attributs précités.

Dans un mode de réalisation préféré, le procédé comporte en outre une étape de fin d'édition de pages multimédia incluant l'objet précité, étape dans laquelle le serveur transmet au terminal une instruction d'effacement des paramètres associés à cet objet.

Avantageusement, cette instruction d'effacement comporte l'identifiant de la zone mémoire du terminal stockant les paramètres associés audit objet, pour effacer de cette zone mémoire ces paramètres.

Dans une réalisation avantageuse, l'objet précité est un objet graphique comportant au moins l'un des éléments parmi :
- une image,
- une séquence d'images,
- une séquence d'images synthétiques 2D (bidimensionnelles),
- et une séquence d'images synthétiques 3D (tridimensionnelles).

On indique que de telles séquences d'images sont susceptibles d'être utilisées par exemple par le standard MPEG-4.

D'autres caractéristiques et avantages de l'invention apparaîtront à l'examen de la description détaillée ci-après, et des dessins annexés sur lesquels :
- la figure 1 illustre les échanges entre un serveur SER et un terminal TER, pour le déroulement des étapes du procédé au sens de l'invention,
- la figure 2 représente schématiquement et partiellement les éléments d'un terminal TER,
- la figure 3 représente des agents logiciels interagissant pour l'édition de pages multimédia auprès du terminal TER.

En annexe, on a retranscrit les codes informatiques (en format binaire), respectifs des commandes "SAVE" (commande de stockage précitée), "*RESTORE*" (commande de restauration précitée) et "*CLEAN*" (commande d'effacement précitée). Il faut comprendre que la description et son annexe en particulier présentent des caractéristiques susceptibles de contribuer à la définition de l'invention.

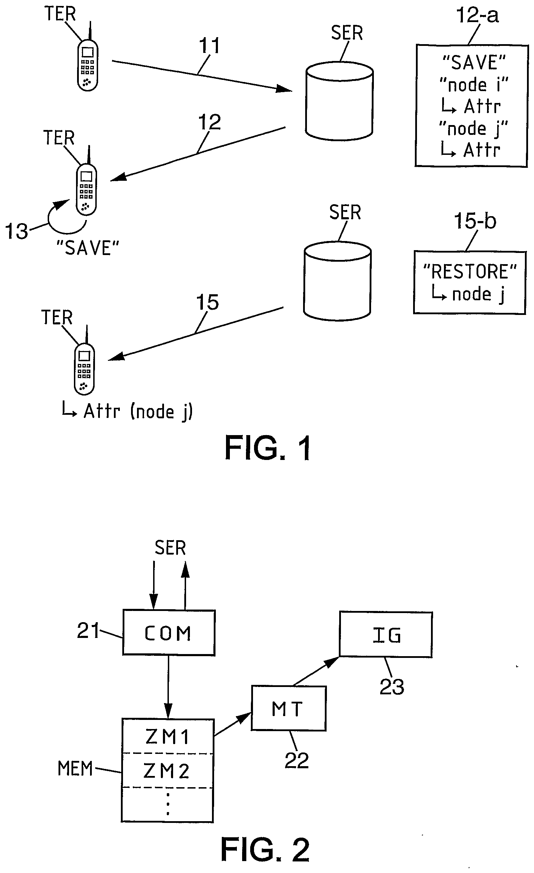

En se référant à la figure 1, le contexte d'application de l'invention peut être décrit par les étapes suivantes :
- Le terminal mobile TER demande une ou plusieurs pages multimédia définissant par exemple un contenu d'animation graphique, à un serveur SER (étape 11).
- Le serveur SER renvoie un contenu qui décrit l'agencement spatio-temporel des objets graphiques intervenant dans l'animation graphique (étape 12).
- Dans ce contenu, une fonction de stockage "SAVE" (correspondant à l'instruction de stockage précitée) est décrite dans la table 12-a. Cette fonction indique au terminal TER qu'il doit stocker des paramètres relatifs à différents objets susceptibles d'intervenir dans des futures scènes graphiques à construire. Ces objets sont identifiés par des noeuds graphiques i, j auxquels on associe notamment des attributs propres (Attr).
- Lorsque le terminal reçoit cette commande de stockage "SAVE", la "*valeur*" de l'objet graphique (notamment de ses attributs) est stockée en mémoire du terminal mobile (étape 13).
- Si le terminal TER reçoit ensuite (étape 15) une commande "RESTORE" (correspondant à l'instruction de restauration précitée), au moment où il rend la scène graphique, il doit exécuter cette commande. Le terminal récupère les informations de l'objet graphique stocké pour les copier dans la scène graphique actuelle.

Bien entendu, si des paramètres associés à un objet graphique ne sont plus utiles pour l'édition de scènes graphiques suivantes, le serveur peut envoyer au terminal une commande "CLEAN" pour effacer ces paramètres de la mémoire du terminal.

Ainsi, ces commandes sont utilisées pour modifier un ensemble de propriétés d'une scène à un instant donné. Les commandes qui doivent être exécutées au même instant sont préférentiellement regroupées dans un même paquet (par exemple un paquet AccessUnit en MPEG-4/System, ou encore un paquet RTP). Dans le but de modifier la scène, le serveur doit donc transmettre des paquets qui contiennent une ou plusieurs de ces commandes.

On se réfère à la figure 2 pour décrire brièvement des modules prévus classiquement dans un terminal TER. Le terminal comporte un module de communication 21, notamment avec le serveur SER, duquel il reçoit les commandes précitées. Typiquement, la commande SAVE comporte un identifiant d'une zone mémoire ZMi (i=1,2,...) dans une mémoire MEM prévue dans le terminal TER, pour stocker les paramètres associés à la commande SAVE dans cette zone mémoire ZMi. Ainsi, une commande suivante RESTORE, comportant le même identifiant de cette zone mémoire ZMi, permettra de récupérer ces paramètres de la mémoire MEM du terminal, ces paramètres étant traités dans une mémoire de travail 22 (par exemple par un logiciel du terminal dit "PLAYER"), éventuellement distincte de la mémoire MEM. Les informations relatives aux objets de la scène en construction sont alors transférées vers une interface 23, par exemple une interface graphique pour un affichage de la scène (ou encore par une interface sonore pour un rendu sonore). De la même manière, la commande "CLEAN" comporte un identifiant de la zone mémoire ZMi pour effacer ensuite les paramètres stockés dans cette zone et qui ne sont plus utiles.

Ci-après, on définit la sémantique des commandes suivantes : "SAVE", "RESTORE" et "CLEAN".

La commande "SAVE" permet de stocker en mémoire certains attributs (ou une arborescence d'attributs) d'un noeud (ou objet graphique) contenu dans la scène courante. Un noeud sauvé reste en mémoire de manière permanente.

Les noeuds suivants peuvent être stockés :
- *Text :* les attributs *couleur* et *string* (chaîne de caractères) sont stockables par exemple pour un texte à afficher.

Après une commande SAVE, le noeud considéré peut avantageusement ne pas être stocké si la mémoire MEM du terminal est totalement remplie.

En se référant à l'annexe retranscrivant le code informatique de la commande "SAVE", les attributs *serviceID* et *groupID* spécifient une zone mémoire ZMi ou l'information doit être stockée.

Plus particulièrement, l'attribut serviceID est un entier indiquant le service ou la référence d'un contenu (référence de l'objet graphique à éditer), tandis que l'entier groupID indique l'espace de nommage des noeuds associés à cet objet. Enfin, le paramètre "nodes" correspond à une liste de noeuds dans laquelle chaque noeud est référencé par son nom (ou son identifiant ID).

La commande RESTORE (retranscrite en annexe) permet de récupérer des noeuds qui ont été stockés auparavant par la commande SAVE. Les noeuds récupérés vont remplacer les noeuds courants dans la scène courante suivant leur nom ou leur identifiant ID.

La commande CLEAN (retranscrite en annexe) permet d'effacer la zone mémoire identifiée par les attributs *service ID* et *groupID.*

Plus spécifiquement encore, les codes informatiques retranscrits en annexe sont en langage SDL (pour "*Synthetic Description Language*"). Ce langage est adopté pour définir les formats de *bitstream* (flux binaire de données). En particulier, des octets sont associés à chaque champ, comme on le verra en détail ci-après. Des informations complémentaires quant à ce langage peuvent être obtenues dans le descriptif de la norme ISO IEC 144-96.

On indique ici que la commande SAVE est déclarée par l'instruction const bit(4) 9 qui signifie que la commande SAVE est déclarée par l'entier "9" qui devra se retrouver dans les quatre premiers bits du flux binaire que reçoit le terminal. Ainsi, si ces quatre premiers bits comportent l'entier "9", ils déclareront la commande SAVE.

La commande suivante "uint(12) serviceID" définit le contexte dans lequel est identifiée un noeud graphique (ou sonore) d'une page multimédia. Plus particulièrement, la commande "uint(i)" sert à déclarer un entier non signé de i bits. On indique que "serviceID" peut viser un site multimédia, par exemple. La commande suivante déclare un paramètre "groupID" qui est relatif à une page multimédia par exemple du site "serviceID". Enfin, la commande déclarant "nbIds" sert à indiquer le nombre d'objets (graphiques ou sonores), identifiés par "id[i]" que l'on va sauvegarder dans la mémoire du terminal.

Ensuite, la commande "RESTORE" est déclarée par l'entier "10", dans les quatre premiers bits du flux binaire. Comme les identifiants "serviceID" et "groupID" sont aussi déclarés dans la commande "RESTORE", le terminal accède directement à l'adresse mémoire où sont stockés les paramètres relatifs à l'objet "id[i]" (ou aux objets "id[nbIds]").

De la même manière, la commande d'effacement "CLEAN" est déclarée, par exemple par l'entier "8" dans les quatre premiers bits du flux binaire. La zone mémoire dans laquelle il faut effacer les données est identifiée, de la même manière, par les paramètres "serviceID" et "groupID".

A titre d'exemple, on indique qu'une application possible des commandes de stockage au sens de l'invention peut être la suivante. Un utilisateur du terminal qui vit dans une ville telle que Rennes (France) souhaite, par exemple pour une application météorologique, savoir quelles sont les conditions climatiques prévues dans les jours futurs, dans cette même ville de Rennes. Ainsi, lorsque l'utilisateur du terminal sélectionne la ville "*Rennes*", sur son terminal, par exemple par le biais d'une commande interactive, l'information relative à l'intérêt que porte l'utilisateur pour Rennes est transmise au serveur. Le serveur indique, par le biais de la commande "SAVE", que le terminal doit stocker les paramètres d'identification du noeud "Rennes", étant donnée que cette ville est susceptible de présenter un intérêt pour la suite, pour l'utilisateur du terminal. On indique que le serveur a stocké aussi une information relative au fait qu'il a envoyé la commande "SAVE" à ce terminal. Ainsi, le terminal est identifié dans une mémoire du serveur, en correspondance de la commande "SAVE". Cette mesure permet au serveur d'envoyer ensuite au terminal une commande "RESTORE", lorsqu'il transmet des informations futures, relatives à la ville de Rennes pour, par exemple, une application météorologique.

Ainsi, à l'aide de commandes aussi simples que celles représentées en annexe (dite de "*bas-niveau*"), le serveur n'a pas besoin de transmettre systématiquement les paramètres relatifs au noeud (ou objet de pages multimédia) que consulte habituellement l'utilisateur. Ceux-ci sont déjà stockés par la commande
"SAVE" dans la mémoire du terminal de cet utilisateur. Le serveur envoie simplement une commande "RESTORE" pour récupérer ces paramètres.

Habituellement, la plupart des scènes graphiques nécessitent une représentation sous forme d'une liste de primitives (fonctions de bas-niveau) de rendu graphique. A chacune de ces primitives correspond une seule fonction, simple, d'attribution d'un paramètre d'édition graphique. Les fonctions de stockage, au sens de l'invention, se présente avantageusement comme des fonctions de bas-niveau. Une représentation bas-niveau des fonctions de stockage permet notamment d'avoir une interaction fine avec les objets de l'animation et un transport binaire entre le serveur et le terminal.

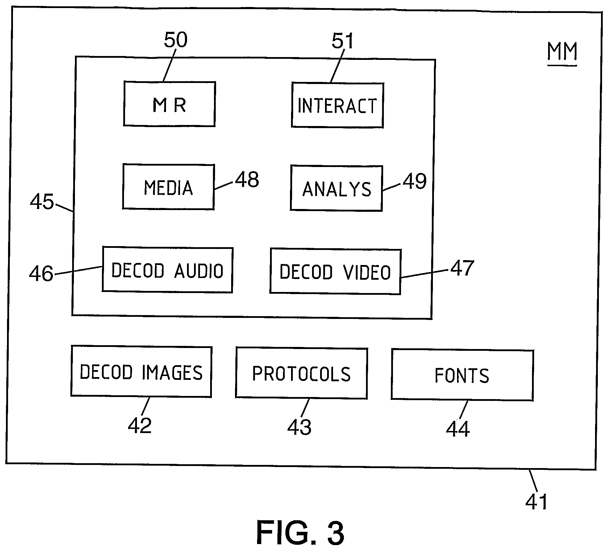

On se réfère maintenant à la figure 3 pour décrire un modèle de transmission et de rendu de scènes graphiques.

Une pluralité de modules 42 (décodeurs d'images divers), 43 (gestion de protocoles réseaux), 44 (gestion de polices (ou caractères) de texte), sont stockés en mémoire 41 du terminal TER, en tant que résidents mémoire. En outre, un logiciel client 45, dit "PLAYER", est aussi stocké en tant que résident mémoire dans la mémoire 41.

Le PLAYER 45 permet de visualiser des contenus animés, interactifs et multimédia sur le terminal mobile. Essentiellement, ce logiciel télécharge ou lit des informations qui décrivent l'agencement spatio-temporel d'objets graphiques, la façon dont ils sont synchronisés et les interactions de l'utilisateur du terminal qui sont possibles sur ce contenu.

Le PLAYER 45 interprète alors les interactions de l'utilisateur et en déduit les comportements appropriés des objets graphiques ou les requêtes à effectuer sur le serveur de contenus. Le PLAYER 45 (par exemple de type "*STREAMEZZO*") inclut des fonctions de rendu d'objets graphiques et des moteurs pour la visualisation (moteur de rendu graphique 50) et l'interaction (moteur d'interaction 51) avec la scène multimédia. Le PLAYER 45 utilise les modules 42, 43, 44 en tant qu'API ("Application Program Interface") du système du terminal mobile qui permettent :
- de décoder les images (module 42),
- de récupérer un flux venant du réseau ou d'une source locale (module 43), et
- de gérer l'affichage du texte et notamment les polices résidentes en standard dans le terminal mobile (module 44).

Les contenus pour l'édition comprennent des graphiques vectoriels animés, du son, de la vidéo et des interactions utilisateur. La visualisation de contenus multimédia interactifs, dans des environnements mobiles, nécessite habituellement l'utilisation des techniques de compression afin d'assurer une mise à disposition efficace du contenu et une optimisation du rendu des objets graphiques composant ce contenu. Ce contenu peut alors être visualisé dans de bonnes conditions sur les terminaux mobiles. Les informations lues ou téléchargées par le PLAYER 45 sont donc fortement compressées et le PLAYER doit donc décompresser ces données et les interpréter à la volée pour jouer le contenu.

Plus particulièrement, le PLAYER 45 comporte des modules de décodage audio et vidéo, respectivement 46 et 47, un analyseur de flux décodé 49, un gestionnaire de média 48, un moteur de rendu (graphique ou sonore) 50 et un moteur d'interactivité 51.

Le fonctionnement du logiciel PLAYER peut se décrire selon les étapes suivantes :
- saisie des données d'entrée via une connexion réseau ou une lecture de fichier,
- décompression de ces données afin d'obtenir une description des objets graphiques directement utilisables par le moteur de rendu audio et graphique 50,
- composition des objets graphiques entre eux pour créer une scène graphique,
- rendu graphique proprement dit des objets audio et graphiques, par affichage d'objets visuels ou par jeu d'un son,
- prise en compte des interactions utilisateurs, par exemple un clique d'un pointeur, ou la pression d'une touche, ou autres,
- établissement d'une connexion à une source d'information locale ou distante si nécessaire.

Suite à une requête de l'utilisateur, cette dernière étape va consister en l'ouverture d'une connexion vers le serveur SER et récupérer un flux binaire. Ce flux binaire est analysé par le PLAYER 45 qui crée alors un objet *ScèneGraph* contenant les différents objets de la scène sous forme de noeuds d'un graphe. Le flux d'information est découpé en paquets qui regroupent des informations qui, dans une réalisation préférée, ne sont valides uniquement qu'à un instant donné et correspondent à un seul type d'information (principe de l'"AccessUnit" du standard MPEG-4).

Le PLAYER analyse chaque paquet et exécute les commandes qui y sont décrites suivant son horloge (non représentée sur les figures), laquelle fournit le temps de la scène multimédia.

Ainsi, on comprendra que ce PLAYER 45, notamment avec les autres modules 42, 43 et 44 du terminal, peut assurer le processus de réception et de décodage de fonctions de stockage d'agencement spatio-temporel d'objets graphiques intervenant dans les pages multimédia incluant par exemple des scènes graphiques et/ou des contenus sonores. Ces fonctions de stockage au sens de la présente invention permettent de gérer la représentation des objets et/ou la modification de leur agencement. Ainsi, les fonctions de stockage permettent de lier plusieurs scènes graphiques et/ou sonores en un service multimédia composite.

On indique que le procédé de l'invention, très général, peut s'appliquer à pratiquement toutes les descriptions d'animations graphiques actuelles, telles que MPEG-4BIFS, SVG, ou autres, dès lors qu'une représentation des signaux qui composent une application sous forme d'un agencement spatio-temporel d'objets graphiques est prévue.

### ANNEXE

```
 Save {
 const bit(4) 9;
 uint(12) serviceID;
 uint(8) groupID;
 uint(lenBits) nbIds;
 for (int i = 0; i < nbIds; i++) {
   uint(idBits) id[i];
   }
}
   Restore {
 const bit(4) 10;
 uint(12) serviceID;
  uint(8) groupID;
}
 Clean {
 const bit(4) 8;
 uint(12) serviceID;
 uint(8) groupID;
 }
```

## Revendications

1. Procédé d'édition de pages multimédia auprès d'un terminal, dans lequel un serveur distribue, à un ou plusieurs terminaux, une partie au moins desdites pages multimédia sous forme d'instructions d'agencements d'objets identifiés par des paramètres associés, **caractérisé en ce que** le procédé comporte :
a) au moins une étape préalable pendant laquelle le serveur transmet au moins une partie des paramètres associés à un objet, ainsi qu'une instruction de stockage desdits paramètres dans une mémoire du terminal,
b) et au moins une étape courante pendant laquelle le serveur transmet une instruction de simple restauration desdits paramètres préalablement stockés en mémoire du terminal, pour éditer au moins une page multimédia dans laquelle intervient ledit objet.

2. Procédé selon la revendication 1, **caractérisé en ce que** l'étape b) seule est réitérée pour l'édition de plusieurs pages multimédia dans lesquelles intervient ledit objet.

3. Procédé selon l'une des revendications 1 et 2, **caractérisé en ce que** lesdits paramètres comportent au moins des attributs déclaratifs d'un agencement de l'objet dans une page multimédia.

4. Procédé selon la revendication 3, **caractérisé en ce que** lesdits paramètres comportent en outre un identifiant d'une zone mémoire du terminal allouée pour le stockage desdits attributs.

5. Procédé selon la revendication 4, **caractérisé en ce que** l'instruction de restauration comporte l'identifiant de ladite zone mémoire pour retrouver lesdits attributs.

6. Procédé selon l'une des revendications précédentes, **caractérisé en ce qu'**il comporte en outre une étape de fin d'édition de pages multimédia incluant ledit objet, étape dans laquelle le serveur transmet au terminal une instruction d'effacement des paramètres associés audit objet.

7. Procédé selon la revendication 6, prise en combinaison avec la revendication 5, **caractérisé en ce que** l'instruction d'effacement comporte l'identifiant de ladite zone mémoire du terminal pour effacer de ladite zone mémoire les paramètres associés à l'objet.

8. Procédé selon l'une des revendications précédentes, **caractérisé en ce que** lesdites instructions sont transmises par paquets du serveur vers le terminal.

9. Procédé selon l'une des revendications précédentes, **caractérisé en ce que** lesdites instructions sont réalisées sous la forme de commandes correspondant à des fonctions de bas-niveau.

10. Procédé selon l'une des revendications précédentes, **caractérisé en ce que** le terminal est un terminal mobile agencé pour coopérer avec un réseau cellulaire.

11. Procédé selon l'une des revendications 1 à 10, **caractérisé en ce que** ledit objet est un objet graphique comportant au moins l'un des éléments parmi :
- une image,
- une séquence d'images,
- une séquence d'images synthétiques 2D,
- et une séquence d'images synthétiques 3D.

## Patentansprüche

1. Verfahren zum Editieren von Multimediaseiten auf einem Endgerät, wobei ein Server wenigstens einen Teil der Multimediaseiten in Form von Anweisungen für Anordnungen von Objekten, die durch zugeordnete Parameter identifiziert sind, an ein oder mehrere Endgeräte verteilt, **dadurch gekennzeichnet, dass** das Verfahren umfasst:
a) wenigstens einen vorausgehenden Schritt, in welchem der Server wenigstens einen Teil der einem Objekt zugeordneten Parameter sowie eine Anweisung zur Speicherung dieser Parameter in einem Speicher des Endgerätes überträgt,
b) und wenigstens einen laufenden Schritt, in welchem der Server eine Anweisung zur einfachen Wiederherstellung der zuvor im Speicher des Endgerätes gespeicherten Parameter überträgt, um wenigstens eine Multimediaseite zu editieren, in der das Objekt enthalten ist.

2. Verfahren nach Anspruch 1, **dadurch gekennzeichnet, dass** für das Editieren mehrerer Multimediaseiten, in denen das Objekt enthalten ist, nur der Schritt b) reiteriert wird.

3. Verfahren nach einem der Ansprüche 1 und 2, **dadurch gekennzeichnet, dass** die Parameter wenigstens deklarative Attribute einer Anordnung des Objekts in einer Multimediaseite aufweisen.

4. Verfahren nach Anspruch 3, **dadurch gekennzeichnet, dass** die Parameter außerdem eine Kennung eines Speicherbereichs des Endgerätes aufweisen, der für die Speicherung der Attribute zugewiesen ist.

5. Verfahren nach Anspruch 4, **dadurch gekennzeichnet, dass** die Anweisung zur Wiederherstellung die Kennung des Speicherbereichs umfasst, um die Attribute abzurufen.

6. Verfahren nach einem der vorhergehenden Ansprüche, **dadurch gekennzeichnet, dass** es außerdem einen Schritt des Endes des Editierens von das Objekt enthaltenden Multimediaseiten umfasst, wobei in diesem Schritt der Server eine Anweisung zum Löschen der dem Objekt zugeordneten Parameter an das Endgerät überträgt.

7. Verfahren nach Anspruch 6 in Verbindung mit Anspruch 5, **dadurch gekennzeichnet, dass** die Anweisung zum Löschen die Kennung des Speicherbereichs des Endgerätes umfasst, um die dem Objekt zugeordneten Parameter aus dem Speicherbereich zu löschen.

8. Verfahren nach einem der vorhergehenden Ansprüche, **dadurch gekennzeichnet, dass** die Anweisungen paketweise vom Server zum Endgerät übertragen werden.

9. Verfahren nach einem der vorhergehenden Ansprüche, **dadurch gekennzeichnet, dass** die Anweisungen in Form von Befehlen realisiert werden, welche Low-Level-Funktionen entsprechen.

10. Verfahren nach einem der vorhergehenden Ansprüche, **dadurch gekennzeichnet, dass** das Endgerät ein mobiles Endgerät ist, das dafür ausgelegt ist, mit einem Mobilfunknetz zusammenzuwirken.

11. Verfahren nach einem der Ansprüche 1 bis 10, **dadurch gekennzeichnet, dass** das Objekt ein graphisches Objekt ist, das wenigstens eines der folgenden Elemente aufweist:
- ein Bild,
- eine Folge von Bildern,
- eine Folge von synthetischen 2D-Bildern,
- eine Folge von synthetischen 3D-Bildern.

## Claims

1. Method of editing multimedia pages on a terminal, in which a server supplies one or more terminals with at least some of said multimedia pages in the form of object arrangement instructions for objects identified by associated parameters, **characterized in that** the method comprises:
a) at least a preliminary step during which the server transmits at least some of the parameters associated with an object, and an instruction to store said parameters in a terminal memory,
b) and at least a main step during which the server transmits a simple instruction to restore said parameters previously stored in terminal memory, to edit at least one multimedia page in which said object occurs.

2. Method according to Claim 1, **characterized in that** the step b) alone is repeated to edit a number of multimedia pages in which said object occurs.

3. Method according to Claims 1 and 2, **characterized in that** said parameters comprise at least declarative attributes of an arrangement of the object in a multimedia page.

4. Method according to Claim 3, **characterized in that** said parameters also include an identifier of a memory area of the terminal allocated to store said attributes.

5. Method according to Claim 4, **characterized in that** the restore instruction includes the identifier of said memory area to retrieve said attributes.

6. Method according to one of the preceding claims, **characterized in that** it also comprises an end-of-editing step for multimedia pages including said object, a step in which the server transmits to the terminal an instruction to delete the parameters associated with said object.

7. Method according to Claim 6, taken in combination with Claim 5, **characterized in that** the delete instruction includes the identifier of said memory area of the terminal to delete from said memory area the parameters associated with the object.

8. Method according to one of the preceding claims, **characterized in that** said instructions are transmitted in packets from the server to the terminal.

9. Method according to one of the preceding claims, **characterized in that** said instructions are in the form of commands corresponding to low-level functions.

10. Method according to one of the preceding claims, **characterized in that** the terminal is a mobile terminal arranged to cooperate with a cellular network.

11. Method according to one of Claims 1 to 10, **characterized in that** said object is a graphic object comprising at least one of the following elements:
- an image,
- a sequence of images,
- a sequence of 2D synthetic images,
- and a sequence of 3D synthetic images.
